# EUROPÄISCHE PATENTSCHRIFT

(11) **EP 3 541 693 B1**
(45) Veröffentlichungstag und Bekanntmachung des Hinweises auf die Patenterteilung: **06.01.2021**
(21) Anmeldenummer: 17801424.7
(22) Anmeldetag: 14.11.2017
(51) Int. Cl.: B23K 11/11, B23K 31/02, B23K 37/04, B23K 37/047, B23K 101/00, B62D 65/02, B62D 65/18

(54) **FÜGEANLAGE MIT EINER FÜGESTATION MIT QUERVERSTEIFUNG FÜR EINEN SPANNRAHMEN**
JOINING PLANT COMPRISING A JOINING STATION HAVING A TRANSVERSE REINFORCEMENT FOR A CLAMPING FRAME
INSTALLATION D'ASSEMBLAGE COMPORTANT UN POSTE D'ASSEMBLAGE MUNI D'UN RAIDISSEMENT TRANSVERSAL D'UN CADRE DE SERRAGE

(30) Priorität: 15.11.2016 AT 510332016
(43) Veröffentlichungstag der Anmeldung: 25.09.2019
(73) Patentinhaber: TMS Turnkey Manufacturing Solutions GmbH, 4031 Linz (AT); Dr. Ing. h.c. F. Porsche AG, 70435 Stuttgart (DE)
(72) Erfinder: HOLZER, Erwin, 4311 Schwertberg (AT); MAYRHOFER, Christoph, 4141 Pfarrkirchen (AT); MALZNER, Roland, 4531 Kematen an der Krems (AT); MILDENBERGER, Jürgen, 76307 Karlsbad (DE)
(74) Vertreter: Patentanwälte Pinter & Weiss OG
(86) Internationale Anmeldenummer: PCT/EP2017/079168
(87) Internationale Veröffentlichungsnummer: WO 2018/091451

(56) Entgegenhaltungen:
- EP-A1- 0 927 598
- EP-A1- 2 279 929
- EP-A2- 0 642 878
- DE-A1-102007 024 589
- US-A1- 2003 115 746

## Beschreibung

Die gegenständliche Erfindung betrifft eine Fügeanlage mit einer Fügestation, in der in Längsrichtung gesehen an zumindest einer Seite eine Spannrahmeneinheit mit einem Spannrahmen angeordnet ist, wobei die Spannrahmeneinheit in der Fügestation in Querrichtung zwischen einer Arbeitsposition und einer Bereitschaftsposition bewegbar angeordnet ist.

Fahrzeugkarosserien werden üblicherweise in Fügestationen einer Fügeanlage hergestellt. Darin wird oftmals eine Bodenbaugruppe der Fahrzeugkarosserie mit Seitenbaugruppen der Fahrzeugkarosserie durch eine Fügeverbindung verbunden. Gleichfalls kann, gleichzeitig oder in einem separaten Arbeitsschritt, eine Dachbaugruppe mit den anderen Baugruppen verbunden werden. Die Baugruppen sind entweder einzelne Bauteile der Fahrzeugkarosserie oder eine schon vorgefügte oder provisorisch verbundene Kombination einzelner Bauteile der Fahrzeugkarosserie. Als Fügeverfahren kommen typischerweise Schweißen, Löten, Nieten, Crimpen, Schrauben, Kleben, etc. zur Anwendung. Um die einzelnen Baugruppen fügen zu können, müssen die Baugruppen in einer Fügestation relativ zueinander genau ausgerichtet werden und in der ausgerichteten Lage verspannt werden. Dazu werden in der Regel sogenannte Spannrahmen verwendet, an denen Einrichtungen zum Halten, Positionieren und Spannen der Baugruppen angeordnet sind. In modernen Fügeanlage für Fahrzeugkarosserien werden verschiedene Typen von Fahrzeugkarosserien gefertigt. Das bedingt natürlich unterschiedliche, an die unterschiedlichen Typen von Baugruppen angepasste Spannrahmen oder Spannrahmenaufbauten, die in der Fügestation bedarfsweise gewechselt werden müssen. Eine derartige Fügeanlage wird daher zur Fertigung verschiedener Fahrzeugkarosserien verwendet. In flexiblen Fügeanlagen können in der Fügestation folglich hintereinander verschiedene Typen von Fahrzeugkarosserie gefügt werden, indem die jeweils benötigten Spannrahmen in der Fügestation bedarfsweise getauscht werden. Das Tauschen der Spannrahmen soll dabei natürlich möglichst rasch und einfach erfolgen und die Fügeanlage soll eine möglichst hohe Flexibilität, beispielsweise in der Anzahl der möglichen verschiedenen Typen an Fahrzeugkarosserien, ermöglichen. Hierfür sind verschiedene Ansätze bekannt.

Für den taktweisen Betrieb der Fügestation ist es auch erforderlich, dass der Spannrahmen zwischen einer Arbeitsposition, in der gefügt wird, und einer Bereitschaftsposition, in der eine gefügte Fahrzeugkarosserie abtransportiert werden und eine neu zu fügende Fahrzeugkarosserie in die Fügestation gefördert werden kann, hin und her bewegt werden kann. Diese Bewegung soll möglichst einfach realisiert werden. Zusätzlich soll der Spannrahmen in der Fügestation trotz dieser notwendigen Bewegung genau positionierbar sein, um eine hohe Fertigungsgenauigkeit zu erreichen.

Die EP 1 611 991 B1 oder die EP 2 279 929 B1 beschreibt eine flexible Fügeanlage, in der verschiedene Spannrahmen in Magazinen gespeichert sind und bedarfsweise getauscht werden. Dazu sind längs der Fügeanlage Führungsschienen angeordnet, auf denen Längsschlitten in Längsrichtung bewegbar geführt sind. Auf den Längsschlitten sind die Spannrahmen angeordnet. Der Längsschlitten kann zwischen der Fügestation und einer Magazinposition in Längsrichtung bewegt werden. In der Fügestation kann der Spannrahmen in eine Arbeitsposition quer zur Längsrichtung bewegt werden. Für diese Querbewegung wird ein gesamter Abschnitt der Führungsschiene mit dem Längsschlitten und dem Spannrahmen quer zur Längsrichtung verschoben. Auch zum Austausch der Spannrahmen kann der Längsschlitten mit einem Abschnitt der Führungsschiene quer zur Längsrichtung verschoben werden. Damit wird zwar eine flexible Fügeanlage realisiert, die jedoch sehr viel Platz benötigt. Insbesondere muss der gesamte Bereich, in dem die Längsschlitten mit den Führungsschienen bewegt wird freigehalten werden, wodurch sehr viel Bodenbereich beansprucht wird. Außerdem ist die Bewegung der Abschnitte der Führungsschienen aufwendig und bedarf aufgrund des hohen Gewichts auch starker Antriebe.

In der EP 968 073 B1 wird ein Spannrahmenwechsel durch eine Portalkonstruktion gelöst. An der Portalkonstruktion ist ein Portalroboter beweglich angeordnet. Der Portalroboter kann zwischen einem Spannrahmenmagazin und der Fügestation bewegt werden. Zum Spannrahmenwechsel wird ein Spannrahmen durch den Portalroboter nach oben aus der Fügestation herausgehoben, an einer freien Magazinposition abgelegt und ein neuer Spannrahmen mit dem Portalroboter ergriffen. Auch zum Einlegen der Karosseriebaugruppe in den Spannrahmen muss der Spannrahmen mit dem Portalroboter an eine Einlegeposition abseits der Fügestation gebracht werden. Das ermöglicht zwar eine hohe Flexibilität, bedingt aber oftmalige und weite Wege des Portalroboters, was die Taktzeiten in der Fügeanlage reduziert. Abgesehen davon ist die Bauhöhe der Fügeanlage sehr hoch, wodurch auch eine entsprechend hohe Fertigungshalle benötigt wird.

Die DE 199 14 125 A1 beschreibt eine Fügeanlage mit einer Fügestation. In die Fügestation wird ein Fahrzeugkörper mit einer Bodenbaugruppe und daran angeordneten vorfixierten Seitenteilen gefördert. In der Fügestation werden die Bodenbaugruppe und die Seitenteile gefügt. Hierfür sind in der Fügestation Spannrahmen vorgesehen, die auf einer verfahrbaren Linearführung zwischen einer Fügeposition und einer Wechselposition quer zur Längsrichtung bewegbar sind. In der Fügeanlage sind an einer Portalkonstruktion oberhalb der Fügestation verschiedene Spannrahmen gespeichert. Zum Wechsel der Spannrahmen wird ein Spannrahmen nach oben weggehoben und ein anderer Spannrahmen in die Linearführung abgesenkt. Auch hier ist die Bauhöhe der Fügeanlage sehr hoch, wodurch auch eine entsprechend hohe Fertigungshalle benötigt wird.

Der EP 2 186 598 B1 kann eine Fügeanlage entnommen werden mit Spannrahmen, die auf Längsschlitten in Längsrichtung verfahren sind. Im Bereich einer Fügestation ist ein Antrieb angeordnet, der in den Spannrahmen einkoppelt und den Spannrahmen quer zur Längsrichtung verschieben kann, um den Spannrahmen aus einer Bereitschaftsposition in eine Arbeitsposition zu bewegen. Zum Wechseln des Spannrahmens wird der Längsschlitten aus dem Bereich der Fügestation in eine Ruheposition gefahren und ein anderer Längsschlitten mit einem anderen Spannrahmen in die Bereitschaftsposition gefahren. Auf diese Weise lassen sich zwei verschiedene Typen von Fahrzeugkarosserien fertigen, wodurch die Flexibilität eingeschränkt ist. Außerdem muss der Spannrahmen während des Transports von der Bereitschaftsposition in die Ruheposition, oder umgekehrt, am Längsschlitten fixiert werden. Diese Fixierung muss in der Bereitschaftsposition wieder gelöst werden, um den Spannrahmen in die Arbeitsposition bewegen zu können. Das wird in der EP 2 186 598 B1 durch eine automatische, mechanische und bewegungsgesteuerte Verriegelung bewirkt. Durch diesen automatischen Verriegelungsmechanismus kann der Steuerungsaufwand reduziert werden, stellt aber einen zusätzlichen mechanischen Verschleiß- und Wartungsteil dar. Bei einer Störung des externen Antriebs oder der Entkopplung oder Verriegelung wird die gesamte Anlage zwangsweise stillgesetzt, was einen Fertigungsausfall darstellt.

In der EP 2 186 598 B1 sind an den Spannrahmen Querträger angeordnet, die in der Arbeitsposition mit den Querträgern eines Spannrahmens auf der anderen Seite verspannt werden, um einen schubsteifen Rahmenverbund zu erhalten. Die bis zur Hälfte der Fügestation reichenden Querträger machen den Spannrahmen schwerer, größer und unhandlicher. Außerdem werden dadurch konkurrierende Toleranzstellen verursacht, da die Positionierung der Spannrahmen in der Fügestation genau erfolgen muss, aber auch die Querträger genau positioniert werden müssen, um miteinander verspannt werden zu können. Das erhöht den konstruktiven und fertigungstechnischen Aufwand für die Fügeanlage.

Die Genauigkeit der Positionierung der Spannrahmen in einer Arbeitsposition in der Fügestation ist wichtig für einen exakten Fügevorgang und damit auch für die erreichbare Fertigungstoleranz der gefügten Fahrzeugkarosserien. Dazu muss der Spannrahmen auch ausreichend steif sein und auch ausreichend stabil und sicher in der Fügestation angeordnet werden. Dazu ist es aus der EP 2 123 390 B1 schon bekannt, die Spannrahmen mittels Positioniereinrichtungen an Säulen des Karosserieträgers zu fixieren, um eine exakte Positionierung des Spannrahmens relativ zum Karosserieträger zu erzielen. Dazu muss der Karosserieträger in der EP 2 123 390 B1 aber in Längs- und Querrichtung schwimmend gelagert sein, was die Konstruktion aufwendiger macht.

Die EP 0 642 878 A2 offenbart eine Schweißstation für Karosseriekomponenten eines Fahrzeugs. Beidseitig der Schweißstation sind Spannrahmen vorgesehen, welche zur LageFixierung der seitlichen Karosseriekomponenten während des Schweißprozesses dienen. Die Spannrahmen können in Querrichtung in eine Arbeitsposition bewegt werden und in der Arbeitsposition an ortsfesten Stützkonstruktionen fixiert werden. Die feste Anbdinfung erfolgt mittels eines speziellen Verriegelungsmechanismus. Nachteilig dabei ist, dass jeweils eine Stützkonstruktion mit Verriegelungsmechanismus pro Seite und Spannrahmen erforderlich ist, was sehr aufwändig ist. Zudem erfolgt die Verriegelung der Spannrahmen an den ortsfesten Stützkonstruktionen in vertikaler Richtung relativ weit unten, wodurch keine ausreichende Steifigkeit im oberen Bereich der Spannrahmen erreicht wird, was insbesondere nachteilig ist, wenn während des Schweißprozesses hohen Kräfte auf die Spannrahmen wirken.

Es ist eine Aufgabe der Erfindung eine Fügeanlage anzugeben, die ein möglichst genaues Positionieren und Fixieren des Spannrahmens in der Fügestation ermöglicht.

Diese Aufgabe wird dadurch gelöst, indem an einer ortsfesten Stützkonstruktion oberhalb der Fügestation ein Koppelteil mit einem Koppelführungsteil angeordnet ist und am Spannrahmen zumindest ein Versteifungsträger angeordnet ist, an dessen freien Ende eine Versteifungs-Verriegelungseinheit vorgesehen ist, die öffenbar und schließbar ist und die in der Arbeitsposition geschlossen und im Eingriff mit dem Koppelführungsteil ist. Über den Koppelteil kann der Spannrahmen in der Fügestation versteift werden, sodass auch unter Krafteinwirkung auf den Spannrahmen eine positionsgenaue Fixierung möglich ist. Durch den Koppelteil muss der Versteifungsträger nicht bis zur Mitte reichen und kann damit kurzer sein, als bisher im Stand der Technik beschrieben. Damit wird der Spannrahmen leichter und einfacher zu handhaben.

Ein einfaches Ankoppeln der Versteifungsträgers am Koppelteil kann realisiert werden, wenn die Versteifungs-Verriegelungseinheit einen feststehenden Verriegelungsteil und einen bewegbaren Verriegelungsteil umfasst, wobei der bewegbare Teil die Schließ- und Öffnungsbewegung der Versteifungs-Verriegelungseinheit ausführt.

Besonders vorteilhaft ist, wenn der erste Verriegelungsteil und der zweite Verriegelungsteil als um eine Drehachse drehbar gelagerte Verriegelungsrollen ausgeführt sind. Damit kann auf einfache Weise eine Beweglichkeit des Spannrahmens in z-Richtung relativ zum Koppelteil ermöglicht werden. Auf diese Weise kann eine Ausgleichsbewegung in z-Richtung verwirklicht werden, womit die Anforderungen an die Genauigkeit der Querversteifung reduziert werden können. Gleichfalls können damit allfällige Vibrationen in z-Richtung einfach abgeleitet werden.

Ebenso ist es vorteilhaft, wenn Koppelteil relativ zur Stützkonstruktion in Längsrichtung bewegbar angeordnet ist. Auf diese Weise kann eine Ausgleichsbewegung in Längsrichtung verwirklicht werden, womit die Anforderungen an die Genauigkeit der Querversteifung redu ziert werden können. Gleichfalls können damit allfällige Vibrationen in Längsrichtung einfach abgeleitet werden.

Ebenso ist es vorteilhaft, wenn der Koppelteil relativ zur Stützkonstruktion in Querrichtung bewegbar angeordnet ist. Auf diese Weise kann eine Ausgleichsbewegung in Querrichtung verwirklicht werden, womit die Anforderungen an die Genauigkeit der Querversteifung reduziert werden können. Gleichfalls können damit allfällige Vibrationen in Querrichtung einfach abgeleitet werden.

Die gegenständliche Erfindung wird nachfolgend unter Bezugnahme auf die Figuren 1 bis 11 näher erläutert, die beispielhaft, schematisch und nicht einschränkend vorteilhafte Ausgestaltungen der Erfindung zeigen. Dabei zeigt
Fig.1 eine erfindungsgemäße Fügeanlage mit einer erfindungsgemäßen Spannrahmen-Transporteinheit,
Fig.2 eine Ansicht der Spannrahmen-Transporteinheit mit Spannrahmenträger ohne Spannrahmen und mit Zustellantrieb,
Fig.3 eine Ansicht der Spannrahmen-Transporteinheit mit Spannrahmenträger mit Spannrahmen und mit Zustellantrieb,
Fig.4 eine Detailansicht der Positionierung des Spannrahmens am Spannrahmenträger,
Fig.5 und 6 Ansichten der Führung der Spannrahmeneinheit zwischen der Bereitschaftsposition und der Arbeitsposition,
Fig.7 und 8 Ansichten der erfindungsgemäßen Versteifungseinheit,
Fig.9 eine erfindungsgemäße Fügeanlage mit einer Portalkonstruktion zum Spannrahmenwechsel,
Fig.10 eine Seitenansicht der Fügeanlage mit einer Portalkonstruktion und
Fig.11 eine erfindungsgemäße Fügeanlage mit einer Portalkonstruktion zum Spannrahmenwechsel.

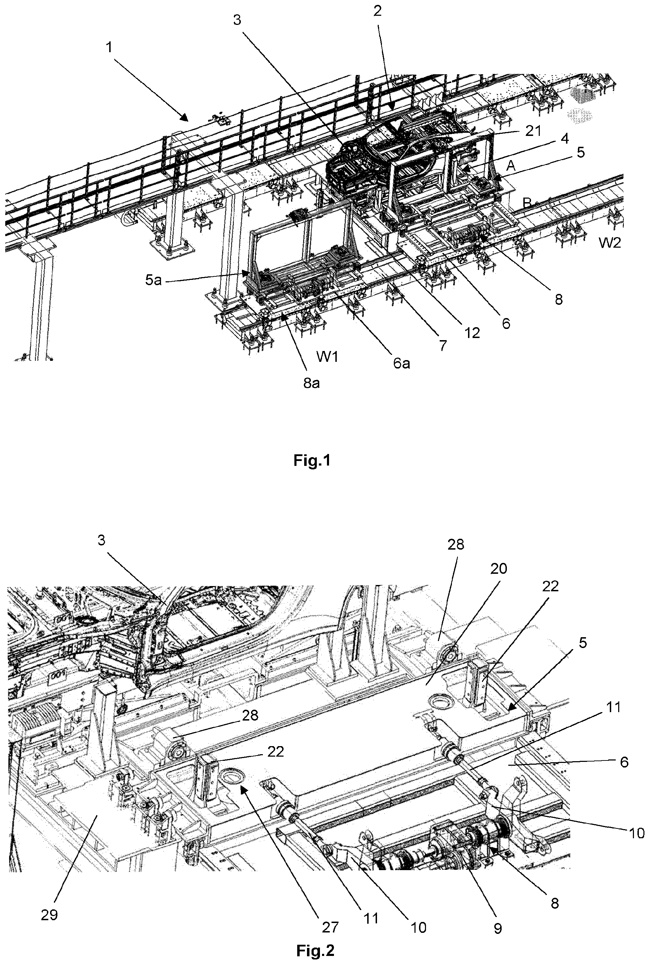

Fig.1 zeigt eine Fügeanlage 1 mit einer Fügestation 2, in der Fahrzeugkarosserien 3 gefügt werden. Die vorfixierte Fahrzeugkarosserie 3, beispielsweise in Form einer Bodenbaugruppe und zumindest einer daran fixierten Seitenbaugruppe, ist beispielswiese auf einem angetriebenen Transportschlitten 4 angeordnet und kann mit dem Transportschlitten 4 in Längsrichtung (x-Richtung) durch die Fügeanlage 1 bewegt werden. Dazu können in der Fügeanlage 1 geeignete Transport- oder Fördereinrichtungen vorgesehen sein, entlang der der Transportschlitten 4 bewegt werden kann. Solche Transport- oder Fördereinrichtungen und Antriebe für den Transportschlitten 4 sind hinlänglich bekannt und sind aus Gründen der Übersichtlichkeit nicht dargestellt.

In Längsrichtung gesehen an zumindest einer Seite der Fügestation 2 ist eine Spannrahmeneinheit 5 vorgesehen, an der hinlänglich bekannte Spanneinrichtungen und/oder Positioniereinrichtungen angeordnet sind, um die Karosserieteile der Fahrzeugkarosserie 3 in der Fügestation 2 zum Fügen zu positionieren und zu spannen. Auch diese sind aus Gründen der Übersichtlichkeit nicht näher dargestellt. Das Fügen erfolgt in bekannter Weise oftmals mittels Roboter, die im Bereich der Fügestation 2 angeordnet sind und die Fügewerkzeuge, wie beispielsweise eine Schweißzange zum Punktschweißen, eine Löteinrichtung, ein Crimpwerkzeug, oder eine Schraubeinrichtung, usw., tragen. Es wäre auch denkbar, direkt an der Spannrahmeneinheit 5 ein Fügewerkzeug anzuordnen. Die Versorgung der Spannrahmeneinheit 5 mit benötigter Energie und benötigten Medien zum Betätigen der Spannrichtungen, Positioniereinrichtungen und/oder Fügewerkzeuge kann in hinlänglich bekannter Weise durch zusammenwirkende Medienkupplungen in der Fügestation 2 und an der Spannrahmeneinheit 5 erfolgen. Durch Positionieren der Spannrahmeneinheit 5 in der Arbeitsposition A kann in hinlänglich bekannter Weise automatisch eine Verbindung der Medienkupplungen erfolgen. Auch das ist aus Gründen der Übersichtlichkeit nicht dargestellt.

Die Spannrahmeneinheit 5 kann in der Fügestation 2 zwischen einer Arbeitsposition A und einer Bereitschaftsposition B in Querrichtung (y-Richtung), also quer zur Längsrichtung, bewegt werden. In Fig.1 ist die Spannrahmeneinheit 5 in der Arbeitsposition A dargestellt. In der Arbeitsposition A sind die Spanneinrichtungen und/oder Positioniereinrichtungen der Spannrahmeneinheit 5 für den Fügevorgang im Eingriff mit den zugeordneten Karosserieteilen der Fahrzeugkarosserie 3 und positionieren und spannen die Karosserieteile der Fahrzeugkarosserie 3. In der Bereitschaftsposition B ist die Spannrahmeneinheit 5 in Querrichtung ein Stück von der Arbeitsposition A in Richtung von der Fahrzeugkarosserie 3 weg zurückgefahren. Wenn sich die Spannrahmeneinheit 5 in der Bereitschaftsposition B befindet, kann eine fertig gefügte Fahrzeugkarosserie 3 aus der Fügestation 2 herausbewegt werden und eine weitere zu fügende Fahrzeugkarosserie 3 in die Fügestation 2 hineinbewegt werden. In der Bereitschaftsposition B könnte aber auch eine Seitenteilbaugruppe, und/oder anderer Karosserieteile, mittels geeigneter Fördertechnik, oder auch manuell, in die Spannrahmeneinheit 5 eingelegt und gehalten werden und so zu einer Bodenbaugruppe in der Fügestation 2 zugestellt werden. Eine Seitenteilbaugruppe und/oder ein anderer Karosserieteil könnte dabei aber auch an einer Bodenbaugruppe in der Fügestation 2 vorfixiert werden. Ebenso ist es denkbar, eine Bodenbaugruppe nicht mit einem Transportschlitten 4 zuzuführen, sondern durch eine geeignete Fördertechnik in die Fügestation 2 zu transportieren und dort auf einer ortsfest angeordneten Bodenspanneinrichtung abzulegen und zu halten. Es ist also nicht zwingend erforderlich, dass die Fahrzeugkarosserie 3 vorfixiert in die Fügestation 2 gefördert wird.

Die Spannrahmeneinheit 5 ist auf einer Spannrahmen-Transporteinheit 6 angeordnet, die in der Fügeanlage 1, zumindest im Bereich der Förderstation 2, in Längsrichtung bewegbar angeordnet ist. In der Fügeanlage 1 kann dazu beispielsweise eine geeignete in der Fügeanlage 1 ortsfeste Führungskonstruktion 7 vorgesehen sein, auf der die Spannrahmen-Transporteinheit 6 geführt wird und entlang der die Spannrahmen-Transporteinheit 6 bewegt werden kann. Die Spannrahmen-Transporteinheit 6 kann dazu einen Längsantrieb (aus Gründen der Übersichtlichkeit nicht dargestellt) aufweisen, mit dem die Spannrahmen-Transporteinheit 6 in Längsrichtung bewegt wird. Alternativ könnte auch ein externer Längsantrieb, beispielsweise an der Führungskonstruktion 7, vorgesehen sein, um die Spannrahmen-Transporteinheit 6 in Längsrichtung zu bewegen. Mittels der Spannrahmen-Transporteinheit 6 kann die Spannrahmeneinheit 5 aus dem Bereich der Fügestation 2 wegbewegt werden, beispielsweise um die Spannrahmeneinheit 5 abseits der Fügestation 2 in einer Wechselposition W1, W2 zu warten.

Auf der Spannrahmen-Transporteinheit 6 ist ein Zustellantrieb 8 angeordnet, mit dem die Spannrahmeneinheit 5 in Querrichtung relativ zur Spannrahmen-Transporteinheit 6, konkret zwischen der Arbeitsposition A und der Bereitschaftsposition B, hin und her bewegt werden kann. Der Zustellantrieb 8 ist beispielsweise als Kurbelschwinge 10 ausgeführt, die von einem Elektromotor 9 angetrieben wird und an der ein Ende einer Schubstange 11 angelenkt ist (Fig.2). Das andere Ende der Schubstange 11 ist an der Spannrahmeneinheit 5 angelenkt. Die Drehbewegung des Elektromotors 9 wird damit in eine translatorische Bewegung der Schubstange 11 in Querrichtung umgesetzt, um die Spannrahmeneinheit 5 zwischen der Arbeitsposition A und der Bereitschaftsposition B hin und her zu bewegen. Der Zustellantrieb 8 kann natürlich auch beliebig anders ausgeführt sein, insbesondere auch hydraulisch oder pneumatisch, wobei die Spannrahmeneinheit 5 auch in der Arbeitsposition A vorzugsweise an den Zustellantrieb 8 angekoppelt bleibt. Ebenso bleibt die Spannrahmeneinheit 5 in der Bereitschaftsposition B an den Zustellantrieb 8 angekoppelt, womit der Zustellantrieb 8 gleichzeitig auch dafür sorgt, dass die Spannrahmeneinheit 5 auch bei einer Längsbewegung der Spannrahmen-Transporteinheit 6 sicher auf dieser gehalten wird. Eine zusätzliche Verriegelung zum Fixieren der Spannrahmeneinheit 5 auf der Spannrahmen-Transporteinheit 6 ist damit nicht erforderlich.

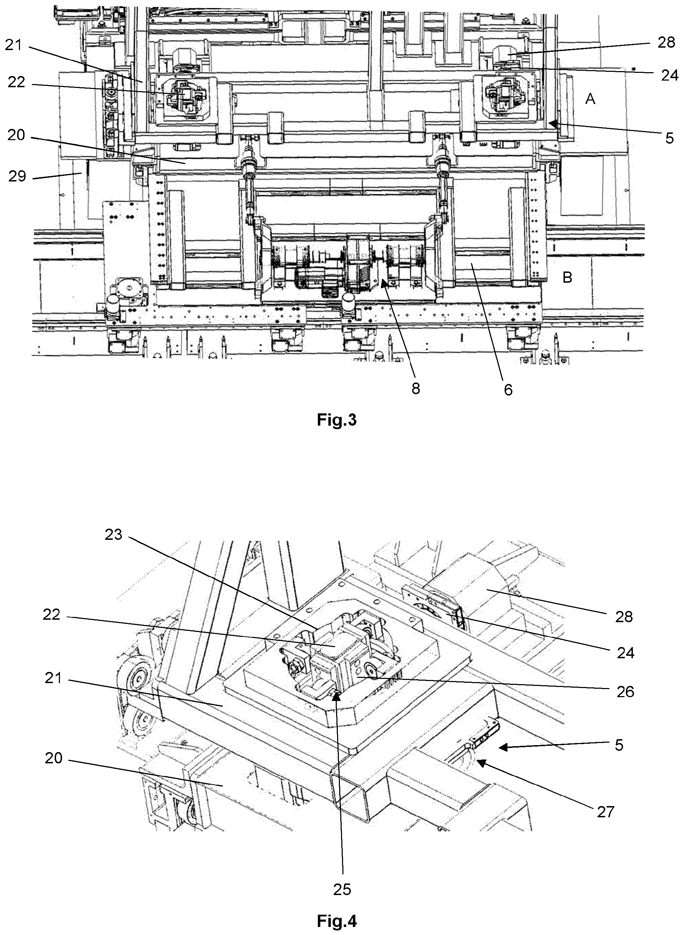

Die Spannrahmeneinheit 5 bildet einen Spannrahmen 21 aus, der sich in der Fügestation 2 in Längsrichtung gesehen seitlich der Fahrzeugkarosserie 3 erstreckt. Die Spannrahmeneinheit 5 ist dazu vorteilhafterweise, aber nicht zwingend, zweiteilig mit einem Spannrahmenträger 20 und einem Spannrahmen 21 ausgeführt, wie mit Bezugnahme auf die Fig.2, 3 und 4 beschrieben wird, wobei der Spannrahmen 21 lösbar am Spannrahmenträger 20 angeordnet ist. Die Spanneinrichtungen, Positioniereinrichtungen und/oder Fügewerkzeuge der Spannrahmeneinheit 5 sind dabei vorzugsweise am Spannrahmen 21 angeordnet. Damit ist es möglich einen einheitlichen Spannrahmenträger 20 zu verwenden, auf dem verschiedene Spannrahmen 21, nicht nur für verschiedene Typen an Fahrzeugkarosserien, sondern auch verschiedener Größen, angeordnet werden können. Das erhöht die Flexibilität und Modularität der Fügeanlage 1. Bei dieser Ausführung greift der Zustellantrieb 8 bevorzugter Weise am Spannrahmenträger 20 an, womit der Spannrahmen 21 noch einfacher gewechselt werden kann.

Am Spannrahmenträger 20 ist zumindest eine Zentriersäule 22 vorgesehen, die mit einer zumindest einer Zentrierausnehmung 23 am Spannrahmen 21 zusammenwirkt, indem die Zentriersäule 22 in die Zentrierausnehmung 23 eingreift und den Spannrahmen 21 damit relativ zum Spannrahmenträger 20 ausrichtet. In der Zentrierausnehmung 23 können dazu auch Zentrierführungen 25, beispielsweise Zentrierrollen, vorgesehen sein, die mit zugeordneten Zentrierflächen 26 an der Zentriersäule 22 zusammenwirken, um eine exakte und sichere Positionierung zu erreichen. Gleichfalls kann am Spannrahmenträger 20 oder am Spannrahmen 21 eine Spannrahmen-Verriegelungseinheit 27 vorgesehen ist, die den Spannrahmen 21 lösbar am Spannrahmenträger 20 fixiert. Die Spannrahmen-Verriegelungseinheit 27 kann beispielsweise als Spanneinheit der Firma Cytec Zylindertechnik ausgeführt sein, womit insbesondere auch spielfreie Verriegelungen möglich sind.

Durch die Zentriersäule 22 und/oder die Spannrahmen-Verriegelungseinheit 27 wird gleichzeitig sichergestellt, dass der Spannrahmen 21 mit dem Spannrahmenträger 20 mitbewegt wird, wenn der Zustellantrieb 8 aktiviert wird.

Mit dieser Ausführung kann eine Spannrahmen-Transporteinheit 6 standardisiert ausgeführt werden und kann durch verschiedene Spannrahmen 21 an unterschiedliche Anwendungen angepasst werden, ohne den Rest der Spannrahmen-Transporteinheit 6, insbesondere den Spannrahmenträger 20 und den Zustellantrieb 8, ändern oder wechseln zu müssen.

Der Spannrahmen 21 sollte in der Fügestation 2 in der Arbeitsposition A vorzugsweise exakt positioniert und fixiert werden, um eine hohe Fertigungstoleranz und Maßgenauigkeit erreichen zu können. Dazu ist in der Fügestation 2 eine ortsfeste Konstruktion 29 vorgesehen, an der zumindest eine Verriegelungseinheit 28 angeordnet ist, die mit einem Gegenverriegelungsteil 24 an der Spannrahmeneinheit 5 bzw. am Spannrahmen 21 zusammenwirkt. Damit wird die Spannrahmeneinheit 5 bzw. der Spannrahmen 21 in der Arbeitsposition A positionsgenau fixiert. Im Falle einer zweiteiligen Ausführung der Spannrahmeneinheit 5 wie oben erläutert, ist der Gegenverriegelungsteil 24 vorzugsweise am Spannrahmen 21 vorgesehen, da der Spannrahmen 21 positionsgenau angeordnet werden soll. Die Verriegelungseinheit 28 mit dem Gegenverriegelungsteil 24 kann beispielsweise wieder als Spanneinheit der Firma Cytec Zylindertechnik ausgeführt sein. Die Anordnung könnte auch umgekehrt sein, also Verriegelungseinheit 28 an der Spannrahmeneinheit 5 und Gegenverriegelungsteil 24 an der ortsfesten Konstruktion. Das würde allerdings den Aufwand erhöhen, da jede Spannrahmen-Transporteinheit 6 mit der betätigten und Energie für die Betätigung benötigenden Verriegelungseinheit 28 ausgeführt wäre.

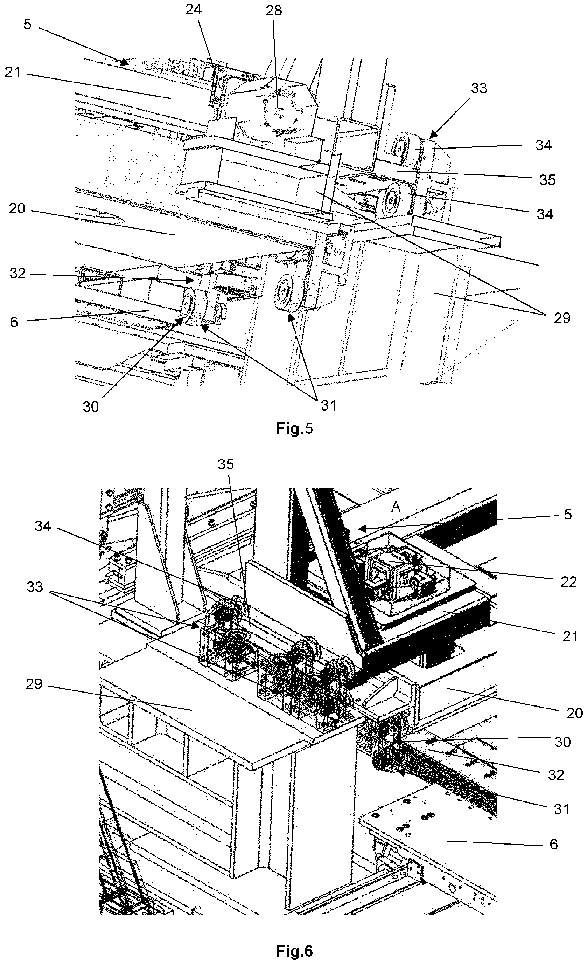

An der Spannrahmen-Transporteinheit 6 ist vorzugsweise eine erste Führungseinrichtung 30 zum Führen der Spannrahmeneinheit 5 in Querrichtung vorgesehen (Fig.5). Diese erste Führungseinrichtung 30 umfasst beispielsweise einen ersten Führungsteil 31, wie erste Führungsrollen, an der Spannrahmeneinheit 5 (oder am Spannrahmenträger 20), die mit einem zweiten Führungsteil 32, wie einer ersten Führungsschiene, an der Spannrahmen-Transporteinheit 6 zusammenwirken. Selbstverständlich könnte diese Anordnung auch umgekehrt sein, also erster Führungsteil 31 an der Spannrahmen-Transporteinheit 6 und zweiter Führungsteil 32 an der Spannrahmeneinheit 5 (oder am Spannrahmenträger 20). Damit werden die Gewichtskräfte der Spannrahmeneinheit 5 in der Bereitschaftsposition B und während der Bewegung in die Arbeitsposition A, oder von dieser zurück, über die Führungseinrichtung 30 aufgenommen bzw. in die Spannrahmen-Transporteinheit 6 abgeleitet. Der Zustellantrieb 8 beliebt dadurch praktisch unbelastet. Nachdem die erste Führungseinrichtung 30 Fertigungstoleranzen, Einstelltoleranzen und auch Verschleiß unterliegt, wäre praktisch jede Spannrahmen-Transporteinheit 6 verschieden und würde die Positionierung der Spannrahmeneinheit 5, bzw. des Spannrahmens 21, in der Arbeitsposition A beeinflussen. Um das zu verhindern, ist diese erste Führungseinrichtung 30 in der Arbeitsposition A vorteilhafterweise entkoppelt, d.h., dass der erste Führungsteil 31 und der zweite Führungsteil 32 nicht mehr zusammenwirken. Stattdessen ist in der Fügestation 2 eine ortsfeste zweite Führungseinrichtung 33 zum Führen der Spannrahmeneinheit 5 in Querrichtung vorgesehen (Fig.6), wobei die Spannrahmeneinheit 5 in der Arbeitsposition A ausschließlich in der zweiten Führungseinrichtung 33 geführt ist. Diese zweite Führungseinrichtung 33 umfasst beispielsweise einen dritten Führungsteil 34, wie zweite Führungsrollen, an einer ortsfesten Konstruktion 29 der Fügestation 2, die mit einem vierten Führungsteil 35, wie einer zweiten Führungsschiene, an der Spannrahmeneinheit 5 (oder am Spannrahmen 21 oder am Spannrahmenträger 20) zusammenwirken. Selbstverständlich könnte diese Anordnung auch umgekehrt sein, also dritter Führungsteil an der Spannrahmeneinheit 5 (oder am Spannrahmen 21 oder am Spannrahmenträger 20) und vierter Führungsteil an der Fügestation 2. Im Übergangsbereich zwischen Arbeitsposition A und Bereitschaftsposition B können auch die erste Führungseinrichtung 30 und zweite Führungseinrichtung 33 gleichzeitig in Eingriff sein, wobei in der Arbeitsposition A aber nur mehr die zweite Führungseinrichtung 33 im Eingriff ist.

In der Arbeitsposition A ist damit der dritte Führungsteil 34, beispielsweise die zweiten Führungsrollen, geometriebestimmend für alle Spannrahmen-Transporteinheiten 6, womit eine exaktere Positionierung des Spannrahmens 21 in der Arbeitsposition A, unabhängig von der Spannrahmen-Transporteinheit 6 erzielt werden kann.

Bis jetzt wurde nur eine Spannrahmen-Transporteinheit 6 an einer Seite (in Längsrichtung gesehenen) der Fügestation 2 beschrieben. Selbstverständlich sind vorteilhafterweise aber an beiden Seiten solche Spannrahmen-Transporteinheit 6 vorgesehen, die identisch aufgebaut sei können, um an beiden Seiten der Fahrzeugkarosserie 3 gleichzeitig fügen zu können. Die obigen Ausführungen gelten somit für beide Seiten gleichermaßen.

Wenn an beiden Seiten eine Spannrahmen-Transporteinheit 6 vorgesehen ist, ist vorzugsweise unterhalb der Fügestation 2 eine durchgehende ortsfeste Basiskonstruktion 12 (Fig.1) vorgesehen, die an beiden Seiten als ortsfeste Konstruktion 29 dient. Diese Basiskonstruktion 12 ist dabei so ausgeführt, dass die Fahrzeugkarosserie 3 oberhalb in Längsrichtung ungehindert transportiert oder positioniert werden kann. Der Spannrahmen 21 stützt sich in der Arbeitsposition A an der ortsfeste Konstruktion 29 ab und muss daher die wirkenden Kräfte und Momente aufnehmen bzw. ableiten. Durch diese Basiskonstruktion 12 als durchgehende ortsfeste Konstruktion 29 wird eine höhere Steifigkeit der Fügestation 2 erreicht, was sich wieder in einer höheren Positionsgenauigkeit beim Positionieren und Fügen der Fahrzeugkarosserie 3 niederschlägt. Außerdem werden dadurch auch mögliche Temperaturunterschiede an beiden Seiten der Fügestation 2 ausgeglichen, womit auch der Temperatureinfluss auf die Positionsgenauigkeit reduziert werden kann.

Die Spannrahmen 21 sind an den oberen Enden in den oben beschriebenen Ausgestaltungen in Querrichtung nicht miteinander verbunden, beispielsweise durch eine oder mehrere Querstreben, wie hinlänglich bekannt ist. Solche Querstreben bedingen weitere Stelle (neben der Positionierung der Spannrahmen 21) an denen Toleranzen eingehalten werden müssen, um die Querstreben positionieren und spannen zu können. Das erfordert eine aufwendigere, weil genauere Konstruktion im Bereich der Fügestation 2. Außerdem benötigen solche Querträger einen zusätzlichen Handhabungsschritt, um diese zu positionieren und zu verspannen. Jeweils eine Hälfte eines Querträgers an den Spannrahmen 21 anzuordnen und die Hälften in der Arbeitsposition A in der Mitte miteinander zu verbinden, ist ebenfalls bekannt. Das macht aber den Spannrahmen 21, bzw. die Spannrahmeneinheit 5, schwerer, größer und unhandlicher und ist daher ebenfalls nachteilig. Die beschriebene erfindungsgemäße Ausgestaltung der Fügestation 2 und der Spannrahmeneinheiten 5, bzw. der Spannrahmen 21, hat sich hingegen für die meisten Anwendungen als ausreichend steif herausgestellt, sodass eine zusätzliche Versteifung in Querrichtung der Spannrahmen 21 an den beiden Seiten der Förderstation 2 oftmals nicht notwendig ist. Falls für eine Anwendung doch eine solche Versteifung in Querrichtung notwendig sein sollte, kann diese in einer besonders vorteilhaften Ausgestaltung wie nachfolgend beschrieben ausgeführt werden. Diese Art der Querversteifung 50 wird als eigenständige Erfindung angesehen und kann auch in anderen Ausführungen einer Fügestation 2, beispielsweise nach dem eingangs beschriebenen Stand der Technik, eingesetzt werden.

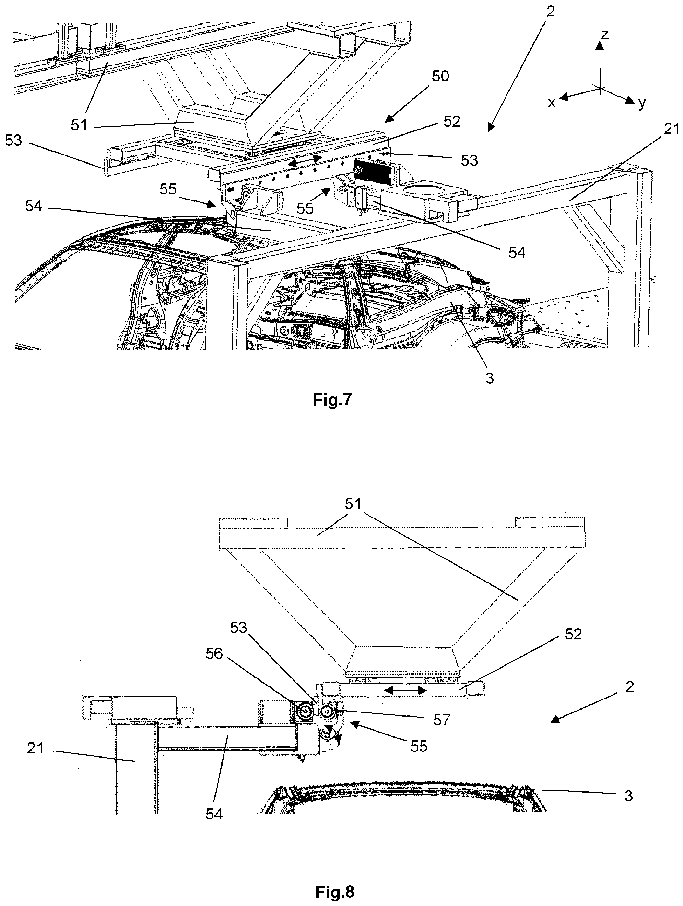

Oberhalb der Fügestation 2 ist hierfür eine ortsfeste Stützkonstruktion 51 vorgesehen, wie in Fig.7 und 8 dargestellt, die sich in der dargestellten Ausgestaltung nach unten in Richtung der Fügestation 2 erstreckt. Als Stützkonstruktion 51 kann auch die nachfolgend noch beschriebene Portalkonstruktion 40 genutzt werden. An der Stützkonstruktion 51 ist ein Koppelteil 52 angeordnet. Der Koppelteil 52 ist vorzugsweise in Längsrichtung gesehen mittig der Fügestation 2 angeordnet. Am Koppelteil 52 ist in Längsrichtung gesehen an zumindest einer Seite, vorzugsweise an beiden Seiten, ein erster Koppelführungsteil 53 angeordnet. Der Koppelführungsteil 53 ist in der gezeigten Ausgestaltung als Führungsschiene ausgeführt, die sich in Längsrichtung erstreckt. Am Spannrahmen 21 ist, vorzugsweise im Bereich des freien Endes des Spannrahmens 21, zumindest ein Versteifungsträger 54 angeordnet, der sich in Querrichtung ein Stück nach innen in Richtung zum Koppelteil 52 erstreckt. Am freien Ende des Versteifungsträgers 54 ist eine Versteifungs-Verriegelungseinheit 55 angeordnet, die mit dem Koppelführungsteil 53 zusammenwirkt. Die Versteifungs-Verriegelungseinheit 55 kann geöffnet werden, um die Spannrahmeneinheit 5 in der Arbeitsposition A ungehindert positionieren zu können. Danach kann die Versteifungs-Verriegelungseinheit 55 geschlossen werden, sodass diese in Eingriff mit dem Koppelführungsteil 53 gerät und eine Versteifung in Querrichtung herstellt.

Die Versteifungs-Verriegelungseinheit 55 könnte wiederum als Spanneinheit der Firma Cytec Zylindertechnik ausgeführt sein. In einer besonders vorteilhaften Ausgestaltung könnte die Versteifungs-Verriegelungseinheit 55 einen am Versteifungsträger 54 fest angeordneten ersten Verriegelungsteil 56, beispielsweise eine um eine Drehachse drehbar gelagerte Verriegelungsrolle, und einen am Versteifungsträger 54 schwenkbar angeordneten zweiten Verriegelungsteil 57, beispielsweise eine um eine Drehachse drehbar gelagert Verriegelungsrolle, umfassen. Durch das Verschwenken des zweiten Verriegelungsteils 57 kann die Versteifungs-Verriegelungseinheit 55 geöffnet und geschlossen werden. Im geschlossenen Zustand wird das Koppelführungsteil 53 zwischen den beiden Verriegelungsteilen 56, 57 geklemmt, wobei aber nachwievor eine Relativbewegung zwischen Koppelteil 52 und Spannrahmen 21 möglich sein soll. Im Falle von Verriegelungsrollen als Verriegelungsteilen 56, 57 ist die Drehachse der drehbar gelagerten Verriegelungsrollen natürlich in Längsrichtung ausgerichtet, was auf einfache Weise die Relativbewegung zwischen Koppelteil 52 und Spannrahmen 21 ermöglicht. Anstelle von Verriegelungsrollen könnte natürlich auch eine gleitende Führung, oder jede andere geeignete Führung, realisiert sein. Ebenso könnte anstelle einer Schwenkbewegung des zweiten Verriegelungsteils 57 auch eine andere Schließ- und Öffnungsbewegung vorgesehen sein. Der bewegliche Verriegelungsteil 57 der Versteifungs-Verriegelungseinheit 55 (z.B. die zweiten Verriegelungsrolle) ist dabei vorzugsweise näher zur Mitte der Fügestation 2 angeordnet, als der feststehende Verriegelungsteil 56 der Versteifungs-Verriegelungseinheit 55 (z.B. die erste Verriegelungsrolle), was die Positionierung des Spannrahmens 21 in der Arbeitsposition A erleichtert. Damit wird eine Versteifung in Querrichtung hergestellt, wobei aber trotzdem Ausgleichsbewegungen oder die Ableitung von Vibrationen in z-Richtung möglich sind. Durch diese Ausführung sind die Toleranzanforderungen zur Herstellung der Querversteifung gering und geraten nicht in Konflikt mit den Toleranzanforderungen der Positionierung des Spannrahmens 21 in der Fügestation 2.

Der Koppelteil 52 könnte zusätzlich auch relativ zur Stützkonstruktion 51 in Längsrichtung (x-Richtung) verschiebbar angeordnet sein (angedeutet durch den Doppelpfeil in Fig.7). Der Koppelteil 52 könnte dazu beispielsweise als x-Schlitten ausgeführt sein, der eine Längsbewegung ermöglicht. Das ermöglicht eine Ausgleichsbewegung und das Ableiten von Vibrationen in Längsrichtung.

Wenn an beiden Seiten der Fügestation 2 Spannrahmen 21vorgesehen sind, könnte der Koppelteil 52 relativ zur Stützkonstruktion 51 in Querrichtung verschiebbar angeordnet sein (angedeutet durch den Doppelpfeil in Fig.8). Der Koppelteil 52 könnte dazu beispielsweise als y-Schlitten ausgeführt sein, der eine Querbewegung ermöglicht. Das ermöglicht eine automatische Zentrierung der Spannrahmens 21 an beiden Seiten, bei gleichzeitiger Versteifung der beiden Spannrahmen 21 in Querrichtung. Außerdem sind damit auch Ausgleichsbewegungen und das Ableiten von Vibrationen in Querrichtung möglich.

Bevorzugt ist der Koppelteil 52 als x-y-Schlitten ausgeführt und damit sowohl in Längsrichtung, als auch in Querrichtung relativ zur Stützkonstruktion 51 bewegbar gelagert.

Für eine hohe Fertigungsflexibilität ist in der Fügeanlage 1 vorteilhafterweise ein Spannrahmenwechsel vorgesehen. Im einfachsten Fall könnte die Spannrahmeneinheit 5 ausgetauscht werden. Das würde allerdings bedingen, dass der Zustellantrieb 8 für den Spannrahmenwechsel zuerst entkoppelt werden müsste, was zwar möglich wäre, aber den Aufwand erhöhen würde. Daher ist die Ausführung der Spannrahmeneinheit 5 mit Spannrahmenträger 20 und darauf lösbar angeordneten Spannrahmen 21 besonders vorteilhaft. Für einen Spannrahmenwechsel muss dabei lediglich die Spannrahmen-Verriegelungseinheit 27 gelöst werden (falls vorhanden), womit der Spannrahmen 21 einfach entfernt werden kann und ein anderer Spannrahmen 21 am Spannrahmenträger 20 angeordnet werden kann. Der Spannrahmenwechsel kann dabei im einfachsten Fall in der Bereitschaftsposition B erfolgen.

Ein vorteilhafter Spannrahmenwechsel kann realisiert werden, wenn an einer Seite der Fügestation 2 zwei Spannrahmen-Transporteinheiten 6, 6a vorgesehen sind, die in Längsrichtung zwischen der Bereitschaftsposition B und einer ersten Wechselposition W1, bzw. zweiten Wechselposition W2, bewegbar sind (Fig.1). Die erste Wechselposition W1 ist dabei in Fertigungsrichtung gesehen stromabwärts der Fügestation 2 (also auf der Seite, an der die gefügte Fahrzeugkarosserie 3 die Fügestation 2 verlässt) und die zweite Wechselposition W2 stromaufwärts der Fügestation 2. Damit kann immer eine der beiden Spannrahmen-Transporteinheit 6 im Bereich der Fügestation 2 angeordnet sein und zwischen der Bereitschaftsposition B und der Arbeitsposition A im Takt der Fertigung hin und her bewegt werden. Die andere Spannrahmen-Transporteinheit 6a befindet sich in einer der beiden Wechselpositionen W1, w2 und kann in der Zwischenzeit mit dem Spannrahmen 21a bestückt werden, der für den nächsten zu fertigenden Typ an Fahrzeugkarosserie 3 benötigt wird. Die Spannrahmen-Transporteinheit 6 mit dem momentan nicht benötigten Spannrahmen 21 kann dann nach dem Fügen aus der Bereitschaftsposition B in eine freie Wechselposition W1, W2 gefahren werden und die vorbereitete Spannrahmen-Transporteinheit 6a mit dem benötigten Spannrahmen 21a wird gleichzeitig in die Bereitschaftsposition B gefahren.

Die Spannrahmen 21, 21 können dabei im Prinzip auf beliebige Weise zur Spannrahmen-Transporteinheit 6, 6a, oder von dieser weg, gefördert werden. Eine Möglichkeit wäre das Vorsehen eines geeigneten Roboters, der Spannrahmen 21, 21a aus einem Spannrahmenmagazin entnimmt oder in dieses ablegt. Eine andere Möglichkeit ist eine geeignete Fördereinrichtung, die ebenfalls Spannrahmen 21, 21a aus einem Spannrahmenmagazin entnimmt oder in dieses ablegt. Eine besonders vorteilhafte Ausgestaltung einer solchen Fördereinrichtung wird nachfolgend beschrieben.

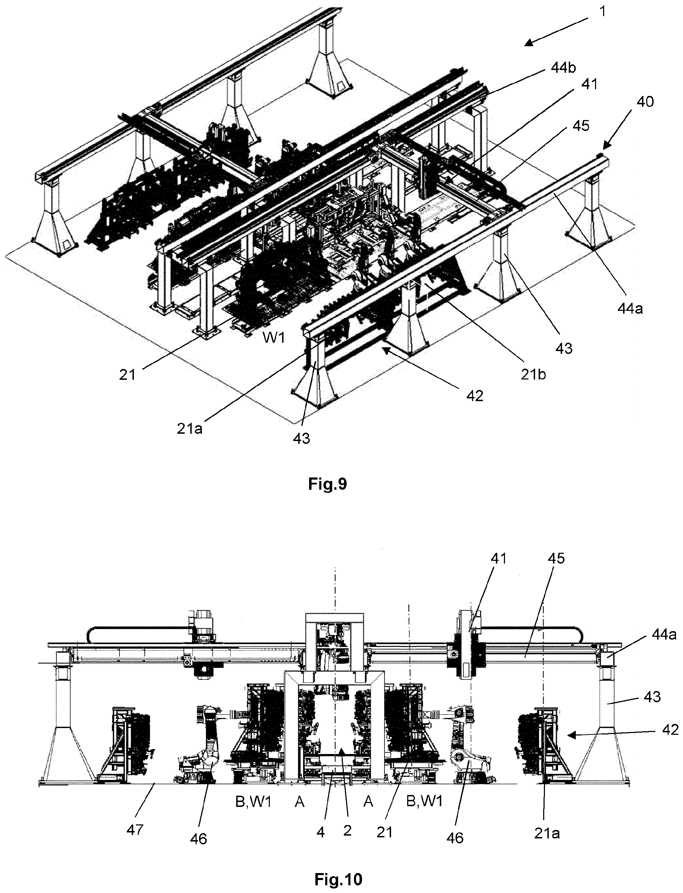

Die Fördereinrichtung besteht in dieser Ausgestaltung aus einer Portalkonstruktion 40 mit einen daran beweglich angeordneten Portalmanipulator 41 (Fig.9). Das wird nachfolgend wieder für eine Seite der Fügestation 2 beschrieben, wobei die Ausführungen aber selbstverständlich ebenso wieder für eine beidseitige Anordnung gelten. In der Fügeanlage 1 ist zumindest ein Spannrahmenmagazin 42 vorgesehen, in dem zumindest ein Spannrahmen 21a abgelegt werden kann. Die Portalkonstruktion 40 überspannt dabei vorzugsweise an einer Seite die Bereitschaftsposition B, oder die vorgesehene Wechselposition W1 falls vorhanden, und das Spannrahmenmagazin 42, bzw. vorzugsweise alle auf einer Seite vorgesehenen Spannrahmenmagazine. Damit ist der Portalmanipulator 41 in der Lage alle Spannrahmen 21, 21a der Seite an jeder Position zu erreichen. Die Portalkonstruktion 40 besteht beispielswiese aus einer Anzahl von Portalsäulen 43, die am Boden 47 befestigt sind, und diese am oberen freien Ende verbindende Längsträger 44a, 44b. Der Portalmanipulator 41 ist vorzugsweise auf einem Querträger 45 angeordnet und kann entlang des Querträgers 45 in Querrichtung (y-Richtung) bewegt werden. Der Querträger 45 ist vorzugsweise zwischen den beiden Längsträgern 44a, 44b in Längsrichtung (x-Richtung) verschiebbar angeordnet. Zusätzlich kann der Portalmanipulator 41 auf und ab (z-Richtung) bewegt werden. Damit wird durch diese Portalkonstruktion 40 mit Portalmanipulator 41 ein 3-Achs Manipulator realisiert. Selbstverständlich sind Adaptionen denkbar. Beispielsweise könnten an einer Seite mehrere Portalmanipulatoren 41 vorgesehen sein. Auch die Portalkonstruktion selbst und Anordnung der Portalsäulen 43, sowie der Längsträger 44a, 44b könnte anders ausgeführt sein. Entscheidend ist lediglich, dass ein Portalmanipulator 41 zumindest ein Spannrahmenmagazin 42 und zumindest die Bereitschaftsposition B und/oder zumindest eine Wechselposition W1 erreichen kann.

Zum Spannrahmenwechsel kann der Portalmanipulator 41 einen nicht mehr benötigten Spannrahmen 21 aus der Bereitschaftsposition B oder einer Wechselposition W1 aufnehmen. Dazu kann der Portalmanipulator 41 in z-Richtung zur Aufnahmen abgesenkt werden und der ergriffene Spannrahmen 21 wird nachfolgend vom Portalmanipulator 41 vom Spannrahmenträger 20 abgehoben. Der Portalmanipulator 41 bewegt den Spannrahmen 21 dann an einen freien Speicherplatz des Spannrahmenmagazins 42. Danach ergreift der Portalmanipulator 41 den benötigten Spannrahmen 21a aus einem anderen Speicherplatz eines erreichbaren Spannrahmenmagazins 42 und fördert den neuen Spannrahmen 21a in die Bereitschaftsposition B oder in eine Wechselposition W1, in der sich ein freier Spannrahmenträger 20 einer Spannrahmen-Transporteinheit 6 befindet, auf dem der neue Spannrahmen 21a abgelegt wird. Danach kann der neue Spannrahmen 21a mit der Spannrahmen-Transporteinheit 6 gegebenenfalls in die Bereitschaftsposition B gefahren werden.

In der Fig.10 ist eine Seitenansicht der Fügeanlage 1 mit Portalkonstruktion 40 und Portalmanipulator 41 dargestellt. Darin sind beispielsweise auch die Roboter 46 gezeigt, die die Fügewerkzeuge zum Fügen tragen.

Der Vorteil dieser Portalkonstruktion 40 liegt darin, dass die einzelnen Spannrahmen 21, 21a, insbesondere die in den Spannrahmenmagazinen 42 angeordneten, immer gut zugänglich sind, vor allem, weil dadurch auch der Bodenbereich frei bleibt. Damit können einfach Wartungsarbeiten an den Spannrahmen 21, 21a durchgeführt werden. Außerdem benötigt diese Portalkonstruktion 40 nur sehr wenig Bauhöhe, im Wesentlichen nicht viel mehr als die Höhe der Fügestation 2, womit auch die Anforderung an die Fertigungshalle deutlich niedrige sind, als bei vergleichbaren Fügeanlagen. Nicht zuletzt kann die Fügeanlage 1 auch sehr flexibel und sehr platzsparend um weitere Spannrahmen 21, und damit um weitere Typen an Fahrzeugkarosserien, erweitert werden.

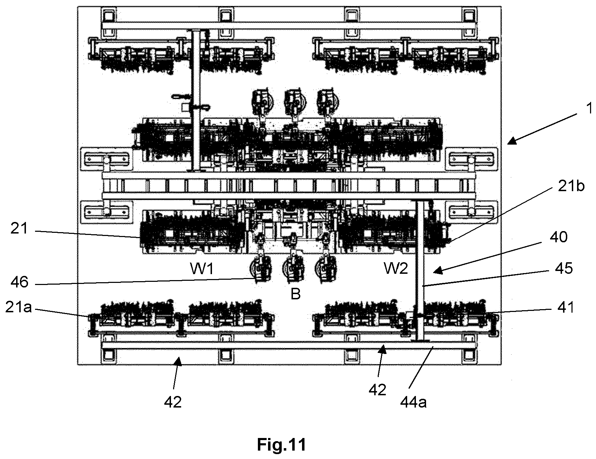

Im Ausführungsbeispiel der Fig.9 können beispielsweise drei verschiedene Spannrahmen 21, 21a, 21b eingesetzt werden (z.B. zwei Spannrahmen auf zwei Spannrahmen-Transporteinheiten im Bereich der Fügestation 2 und ein Spannrahmen in zwei verfügbaren Speicherplätzen eines Spannrahmenmagazins 42). Im Beispiel nach Fig.11 wären es schon fünf verschiedene Spannrahmen 21, 21a, 21b (z.B. zwei Spannrahmen auf zwei Spannrahmen-Transporteinheiten im Bereich der Fügestation und drei Spannrahmen in vier verfügbaren Speicherplätzen eines Spannrahmenmagazins 42). Der Erweiterung sind dabei praktisch keine Grenzen gesetzt, wobei natürlich auch weniger als drei, und auch mehr als fünf, verschiedene Spannrahmen denkbar sind. Auch die Ausführung des Spannrahmenmagazins 42 ist praktisch beliebig, wobei das Spannrahmenmagazin 42 vorteilhafterweise nicht höher bauen sollte, als die Fügestation 2.

Anstelle der Spannrahmen 21, 21a, 21b könnte mit der Portalkonstruktion auch eine Spannrahmeneinheit 5 zum Spannrahmenwechsel bewegt werden, wie oben beschrieben.

Vorhandene Sensoren, Aktuatoren und Steuereinheiten, beispielsweise zum Steuern der Fügeanlage 1, der Fügestation 2 und der Roboter 46, sind aus Gründen der Übersichtlichkeit nicht dargestellt, aber hinlänglich bekannt. Ebenso sind Methoden zum Steuern solcher Fügeanlagen 1 bekannt, insbesondere auch um einen beliebigen Karosserietypenmix in der Fügeanlage 1 fertigen zu können.

## Patentansprüche

1. Fügeanlage mit einer Fügestation (2), in der in Längsrichtung gesehen an zumindest einer Seite eine Spannrahmeneinheit (5) mit einem Spannrahmen (21) angeordnet ist, wobei die Spannrahmeneinheit (5) in der Fügestation (2) in Querrichtung zwischen einer Arbeitsposition (A) und einer Bereitschaftsposition (B) bewegbar angeordnet ist, **dadurch gekennzeichnet, dass** an einer ortsfesten Stützkonstruktion (51) oberhalb der Fügestation (2) ein Koppelteil (52) mit einem Koppelführungsteil (53) angeordnet ist und am Spannrahmen (21) zumindest ein Versteifungsträger (54) angeordnet ist, an dessen freien Ende eine Versteifungs-Verriegelungseinheit (55) vorgesehen ist, die öffenbar und schließbar ist und die in der Arbeitsposition (A) geschlossen und im Eingriff mit dem Koppelführungsteil (53) ist.

2. Fügeanlage nach Anspruch 1, **dadurch gekennzeichnet, dass** die Versteifungs-Verriegelungseinheit (55) einen feststehenden ersten Verriegelungsteil (56) und einen bewegbaren zweiten Verriegelungsteil (57) umfasst, wobei der bewegbare Verriegelungsteil (57) die Schließ- und Öffnungsbewegung der Versteifungs-Verriegelungseinheit (55) ausführt.

3. Fügeanlage nach Anspruch 2, **dadurch gekennzeichnet, dass** der erste Verriegelungsteil (56) und der zweite Verriegelungsteil (57) als um eine Drehachse drehbar gelagerte Verriegelungsrollen ausgeführt sind.

4. Fügeanlage nach einem der Ansprüche 1 bis 3, **dadurch gekennzeichnet, dass** der Koppelteil (52) relativ zur Stützkonstruktion (51) in Längsrichtung bewegbar angeordnet ist.

5. Fügeanlage nach einem der Ansprüche 1 bis 4, **dadurch gekennzeichnet, dass** der Koppelteil (52) relativ zur Stützkonstruktion (51) in Querrichtung bewegbar angeordnet ist.

## Claims

1. Joining system comprising a joining station (2) in which, on at least one side viewed in the longitudinal direction, a clamping frame unit (5) having a clamping frame (21) is arranged, the clamping frame unit (5) being arranged in the joining station (2) so as to be movable in the transverse direction between a working position (A) and a standby position (B), **characterized in that** a coupling part (52) having a coupling guiding part (53) is arranged on a stationary support structure (51) above the joining station (2) and at least one stiffening support (54) is arranged on the clamping frame (21), on the free end of which a stiffening locking unit (55) is provided which can be opened and closed and which is closed and in engagement with the coupling guiding part (53) in the working position (A).

2. Joining system according to claim 1, **characterized in that** the stiffening locking unit (55) comprises a stationary first locking part (56) and a movable second locking part (57), the movable locking part (57) carrying out the closing and opening movement of the stiffening locking unit (55).

3. Joining system according to claim 2, **characterized in that** the first locking part (56) and the second locking part (57) are designed as locking rollers that are rotatably mounted about an axis of rotation.

4. Joining system according to any of claims 1 to 3, **characterized in that** the coupling part (52) is arranged so to be movable in the longitudinal direction relative to the support structure (51).

5. Joining system according to any of claims 1 to 4, **characterized in that** the coupling part (52) is arranged so to be movable in the transverse direction relative to the support structure (51).

## Revendications

1. Installation d'assemblage comportant un poste d'assemblage (2) dans lequel, vu dans la direction longitudinale, une unité de cadre de serrage (5) comportant un cadre de serrage (21) est disposée sur au moins un côté, l'unité de cadre de serrage (5) dans le poste d'assemblage (2) étant disposée mobile dans la direction transversale entre une position de travail (A) et une position d'attente (B), **caractérisée en ce qu'**un élément d'accouplement (52) comportant un élément de guidage d'accouplement (53) est disposé sur une structure d'appui fixe (51) au-dessus du poste d'assemblage (2) et **en ce qu'**au moins un support de raidissement (54) est disposé sur le cadre de serrage (21), une unité de raidissement/verrouillage (55), qui peut être ouverte et fermée et qui, dans la position de travail (A), est fermée et en prise avec l'élément de guidage d'accouplement (53), étant prévue sur l'extrémité libre du support de raidissement.

2. Installation d'assemblage selon la revendication 1, **caractérisée en ce que** l'unité de raidissement/verrouillage (55) comprend un premier élément de verrouillage fixe (56) et un second élément de verrouillage mobile (57), l'élément de verrouillage mobile (57) réalisant le mouvement de fermeture et d'ouverture de l'unité de raidissement/verrouillage (55).

3. Installation d'assemblage selon la revendication 2, **caractérisée en ce que** le premier élément de verrouillage (56) et le second élément de verrouillage (57) sont réalisés sous forme de rouleaux de verrouillage montés en rotation autour d'un axe de rotation.

4. Installation d'assemblage selon l'une des revendications 1 à 3, **caractérisée en ce que** l'élément d'accouplement (52) est disposé mobile dans la direction longitudinale par rapport à la structure d'appui (51).

5. Installation d'assemblage selon l'une des revendications 1 à 4, **caractérisée en ce que** l'élément d'accouplement (52) est disposé mobile dans la direction transversale par rapport à la structure d'appui (51).
